# EUROPÄISCHE PATENTSCHRIFT

(11) **EP 1 350 078 B1**
(45) Veröffentlichungstag und Bekanntmachung des Hinweises auf die Patenterteilung: **14.02.2018**
(21) Anmeldenummer: 01273164.2
(22) Anmeldetag: 20.12.2001
(51) Int. Cl.: G01F 1/684, G01F 15/10

(54) **MIKROMECHANISCHER FLUSSSENSOR MIT TENSILER BESCHICHTUNG**
MICROMECHANICAL FLOW SENSOR WITH A TENSILE COATING
DETECTEUR DE FLUX MICROMECANIQUE A REVETEMENT EXTENSIBLE

(30) Priorität: 10.01.2001 CH 31012001
(43) Veröffentlichungstag der Anmeldung: 08.10.2003
(73) Patentinhaber: Sensirion Holding AG, 8712 Stäfa (CH)
(72) Erfinder: STEINER VANHA, Ralph, CH-8006 Zürich (CH); CILENTO, Tommaso Francesco, CH-6020 Emmenbrücke (CH)
(74) Vertreter: Sutter, Kurt
(86) Internationale Anmeldenummer: PCT/IB2001/002738
(87) Internationale Veröffentlichungsnummer: WO 2002/055967

(56) Entgegenhaltungen:
- WO-A-01/98736
- DE-A1- 4 219 454
- DE-A1- 4 324 040
- DE-C1- 19 744 228
- US-A- 4 478 076
- US-A- 4 841 769
- US-A- 5 006 421

## Beschreibung

Diese Anmeldung beansprucht die Priorität der Schweizer Patentanmeldung 0031/01, die am 10. Januar 2001 eingereicht wurde.

### Hintergrund der Erfindung

Die Erfindung betrifft einen Sensor gemäss Anspruch 1 sowie die Verwendung des Sensors nach Anspruch 11. Sensoren dieser Art sind z.B. Fluss- oder Temperatursensoren, bei welchen mindestens ein Teil des Messelements auf einer Membran angeordnet ist. Diese Membran ist oftmals nur einige Mikrometer dick und überspannt eine Öffnung oder Vertiefung im Halbleiterbaustein.

Vorzugsweise sind bei derartigen Sensoren auf dem Halbleiterbaustein weitere aktive elektronische Komponenten integriert, beispielsweise Transistoren für Verstärker oder Referenzspannungsquellen. US5006421 beschreibt ein Heiz- und Sensorelement, bei welchem ein Membranabschnitt aus drei abwechselnden Schichten aus Siliziumoxid, Siliziumnitrid und Siliziumoxid besteht, welche innere Druck- und Zugspannungen gegeneinander aufheben.

US4487076 beschreibt einen Flusssensor mit einer Membran und verschiedenen, auf der Membran abgelegten Schichten.

Die Membran wird in der Regel von den bei der Herstellung der Schaltung abgelagerten Schichten gebildet, wobei der Halbleiter unter den Schichten weggeätzt wird. Die Schichten, die bei den meisten konventionellen Herstellungsprozessen aufgebracht werden, stehen jedoch normalerweise unter Druckspannung, d.h. es wirken Druckkräfte in der Schichtebene, z.B. weil die Schichten bei erhöhter Temperatur aufgebracht wurden und sich beim Abkühlen weniger stark zusammengezogen haben als das Substrat. Die Grösse der Druckspannung hängt vom Herstellungsprozess und dem Schichtaufbau der Membran ab. Diese Druckspannung kann zu einem unerwünschten Verbeulen ("buckling") der Membran führen, welche diese mechanisch instabil macht.

### Darstellung der Erfindung

Es stellt sich deshalb die Aufgabe, einen Sensor der eingangs genannten Art bereitzustellen, bei welchem dieses Problem vermieden wird.

Um das Durchbiegen der Membran zu vermeiden, wird auf dem Halbleiterbaustein eine tensile Beschichtung aufgebracht. Diese Beschichtung lässt mindestens einen Teil, vorzugsweise alle der auf dem Halbleiterbaustein integrierten aktiven elektronischen Komponenten unbedeckt. Wie es sich zeigt, kann die Beschichtung ansonsten zu einer Veränderung oder Beeinträchtigung der Funktion dieser Komponenten führen, da sie die elektrischen Parameter des Halbleiters beeinflusst. Vorzugsweise bleiben deshalb alle aktiven elektronischen Komponenten von der tensilen Beschichtung unbedeckt.

Die tensile Beschichtung überdeckt vorzugsweise die ganze Membran. Um einen zur Straffung der Membran geeigneten Zug auszuüben, sollte sie die Membran an mindestens zwei gegenüberliegenden Seiten etwas überlappen.

Die Erfindung ist insbesondere geeignet für die Anwendung in integrierten Flusssensoren.

### Kurze Beschreibung der Zeichnungen

Weitere Ausgestaltungen, Vorteile und Anwendungen der Erfindung ergeben sich aus den abhängigen Ansprüchen und aus der nun folgenden Beschreibung anhand der Figuren. Dabei zeigen:
Fig. 1 eine Draufsicht auf einen Flusssensor, wobei die unter der tensilen Beschichtung liegenden Strukturen gestrichelt dargestellt sind,
Fig. 2 einen Schnitt entlang Linie I-I von Fig. 2,
Fig. 3 eine Draufsicht auf den Flusssensor, in welcher nebst der tensilen Beschichtung eine zusätzliche Schutzschicht dargestellt ist,
Fig. 4 eine beispielhafte Struktur im Bereich der Schutzschicht und
Fig. 5 eine beispielhafte Struktur im Bereich der tensilen Beschichtung.

### Wege zur Ausführung der Erfindung

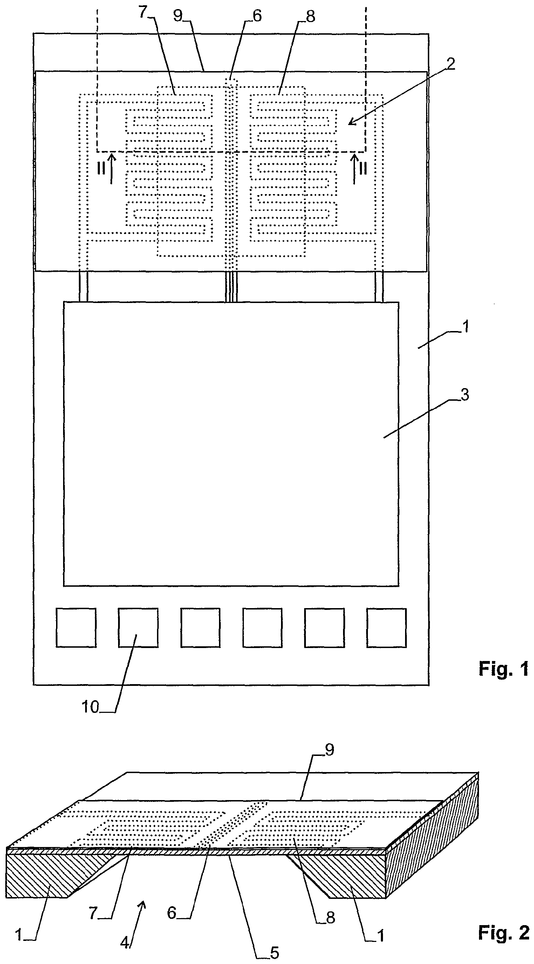

In Fig. 1 und 2 ist eine Ausführung der Erfindung in Form eines Flusssensors dargestellt. Dieser umfasst einen Halbleiterbaustein 1, auf welchem ein Messelement 2 und eine Schaltung 3 integriert sind.

Im Halbleiterbaustein 1 wurde eine Öffnung oder Vertiefung 4 ausgeätzt, die von einer dünnen Membran 5 abgedeckt wird.

Auf der Membran 5 ist eine Heizung 6 angeordnet. Symmetrisch zur Heizung 6 sind zwei mäanderförmige Thermosäulen 7, 8 vorgesehen, die als Temperatursensoren dienen. Die Thermosäulen 7, 8 und die Heizung 6 liegen so zur Flussrichtung des zu messenden Mediums, dass das Medium zuerst die erste Thermosäule 7, dann die Heizung 6 und schliesslich die zweite Thermosäule 8 überstreicht.

Das Messelement 2 ist von einer tensilen Beschichtung 9 bedeckt. Diese steht unter Zugspannung und überlappt die Membran 5 allseitig, oder zumindest auf zwei gegenüberliegenden Seiten der Vertiefung bzw. Öffnung 4. Die Überlappung reicht mindestens soweit, dass die tensile Beschichtung 9 auf dem Halbleiterbaustein 1 zur Ableitung der Zugspannung Halt findet. Die Zugspannung in der tensilen Beschichtung 9 ist zumindest so gross, dass sie eine in der Membran 5 herrschende Druckspannung übersteigt und somit ein tensiler Gesamtstress resultiert. Die Beschichtung 9 hält deshalb die Membran 5 straff und verhindert bzw. erschwert ein Durchwölben derselben.

Die tensile Beschichtung 9 kann z.B. aus Siliziumoxid, Siliziumnitrid oder einem Polymer, insbesondere Polyimid, bestehen. Weitere mögliche Materialien sind beispielsweise "Diamond Like Carbon" (DLC), Polyetheretherketon (PEEK) oder Silikon. Siliziumnitrid hat sich als besonders geeignet herausgestellt.

Die Tensilität der Beschichtung 9 kann mittels bekannter Verfahren durch geeignete Wahl der Herstellungsparameter gesteuert werden, siehe z.B. U. Münch et al., "Industrial Fabrication Technology for CMOS Infrared Sensor Arrays" in "Transducers '97, International conference on Solid State Sensors and Actuators", IEEE 1997, wo beschrieben wird, wie durch geeignete Wahl der Niederfrequenzleistung und des Drucks in einem PECVD-Verfahren die Zugspannung einer Schicht aus Silizium-Oxinitrid eingestellt werden kann.

Eine Beschichtung unter Zugspannung kann auch hergestellt werden, indem ein Beschichtungsmaterial mit einem grösseren thermischen Ausdehnungskoeffizienten als Silizium bei erhöhter Temperatur auf den Halbleiterbaustein 1 aufgebracht wird. Beim Abkühlen des Bausteins entsteht dabei zwangsläufig eine tensile Beschichtung.

Die Zugspannung sollte so gross gewählt werden, dass sie eine allfällige Druckspannung in der Membran 5 zu kompensieren vermag. Vorzugsweise beträgt die Zugspannung mindestens 100 MPa.

Zur Strukturierung bzw. Definition der räumlichen Ausdehnung der tensilen Beschichtung 9 können photolitographische Verfahren angewendet werden. Es kann auch eine Schattenmaske eingesetzt werden, oder es kann eine Lift-Off Technik verwendet werden, bei welcher eine zusätzliche Materialschicht unterhalb der Beschichtung 9 überall dort aufgelöst wird, wo die Beschichtung 9 entfernt werden soll.

Das generelle Funktionsprinzip des Messelements 2 ist ausführlich in "Scaling of Thermal CMOS Gas Flow Microsensors: Experiment and Simulation" von F. Mayer et al., in Proc. IEEE Micro Electro Mechanical Systems, (IEEE, 1996), pp. 116ff beschrieben. Insbesondere werden zur Bestimmung des Massenflusses über dem Sensor die Temperaturen über den Thermosäulen 7, 8 gemessen. Die Differenz dieser Temperaturen ist eine Funktion des Massenflusses.

Für die entsprechende Auswertung der Signale der Thermosäulen 7, 8 ist die Schaltung 3 vorgesehen, welche z.B. in CMOS-Technik ausgeführt ist. Sie umfasst Verstärker, A/D-Wandler mit Referenzspannungsquellen und eine digitale Auswerteschaltung mit Interface. Zur Verbindung der Schaltung 3 mit der Aussenwelt sind Kontaktflächen 10 vorgesehen.

Wie aus Fig. 1 ersichtlich, bedeckt die tensile Beschichtung 9 nur einen Teil des Halbleiterbausteins 1, nämlich jenen Teil, der dem zu messenden Medium ausgesetzt wird. Insbesondere erstreckt sich die tensile Beschichtung 9 nicht über die Schaltung 3. Versuche haben ergeben, dass mechanischer Stress, ausgelöst durch die tensile Beschichtung, die elektrischen Parameter des Halbleiterbausteins 1 beeinflussen kann, was z.B. zu einer Änderung der Eigenschaften von Transistoren, Referenzspannungsquellen und anderen Bauteilen, insbesondere von aktiven Bauteilen und Widerständen, führen kann. Indem die tensile Beschichtung 9 nicht über diese Komponenten gelegt wird, kann eine derartige Beeinträchtigung vermieden werden. Dies vereinfacht die Herstellung, da bei der Berechnung der Schaltung von den bekannten elektrischen Parametern des Halbleiters ausgegangen werden kann.

Dank der tensilen Beschichtung 9 kann, wie bereits erwähnt, ein "Buckling" der Membran 5 verhindert werden. Sie verhindert oder reduziert auch ein Durchbiegen der Membran 5, wenn über dieser ein Druckunterschied anliegt.

Im oben beschriebenen Beispiel wurde der Erfindung im Rahmen eines Flussdetektors beschrieben, sie kann jedoch auch in anderen Anwendungen eingesetzt werden:
- Eine Membran 5 der in Fig. 2 gezeigten Art kann auch in Drucksensoren verwendet werden, bei denen über der Membran ein zu messender Druckunterschied anliegt. In diesem Fall kann die tensile Beschichtung 9 auch zur Beeinflussung der Empfindlichkeit des Sensors eingesetzt werden. Je höher die Zugspannung und der Elastizitätsmodul in der Beschichtung 9 ist, desto geringer wird die Empfindlichkeit.
- Weiter kann die tensile Beschichtung 9 für weitere Sensortypen verwendet werden, bei denen eine Membran der in Fig. 2 gezeigten Art zum Einsatz kommt, z.B. für Infrarotsensoren.
- Die tensile Beschichtung 9 kann selbst auch aktiver Teil des Sensors sein. So kann sie aus einem Material bestehen, dessen dielektrische oder elektrische Eigenschaften sich abhängig von einem zu messenden Parameter verändern. Bei einem Feuchtesensor kann z.B. eine polymerische tensile Beschichtung verwendet werden, deren Dielektrizitätskonstante oder Leitfähigkeit sich abhängig von der momentanen Feuchte ändert. Bei einem Stoffsensor kann die tensile Beschichtung 9 chemische bzw. biologische Reaktionen mit dem zu messenden Stoff eingehen oder es kann sich deren chemisches Potential oder deren Austrittsarbeit ändern. Auch die optischen Eigenschaften der tensilen Beschichtung können abhängig von einem zu messenden Parameter sein.

Die tensile Beschichtung 9 kann auch weitere Aufgaben übernehmen. Insbesondere kann sie z.B. eine Isolationsschicht bilden, die die auf der Membran angeordneten Bauelemente vom zu messenden Medium trennt. Sie kann z.B. als Passivierung dienen, die eine Beschädigung der Bauelemente durch Säuren oder Wasser verhindert.

Die Schichten der Membran 5 können Schichten sein, die bei dem zur Herstellung der Schaltung 3 verwendeten Prozess anfallen. Somit sind die mechanischen Eigenschaften und insbesondere die Tensilität dieser Schichten nicht frei wählbar. Die zusätzliche tensile Beschichtung 9 erlaubt es jedoch unabhängig vom verwendeten Prozess, die Membran 5 straff zu halten und deren Biegeeigenschaften zu kontrollieren.

Im oben beschriebenen Beispiel liegt die tensile Beschichtung über der Membran 5 und über den auf der Membran angeordneten Bauteilen. Sie kann jedoch auch unterhalb der Membran 5 oder als Schicht in der Membran 5 angeordnet sein.

Weiter werden elektronische Halbleiterbauteile oftmals mit einer Schutzschicht versehen. Diese Schutzschicht besteht vorzugsweise aus Siliziumnitrid (Si₃N₄) und dient insbesondere zum Schutz der obersten Metallschicht des Bausteins vor Korrosion. Damit die Schutzschicht möglichst dicht ist, ist sie in der Regel kompressiv, d.h. sie steht unter einer Druckspannung parallel zur Halbleiteroberfläche. In normalen CMOS-Herstellungsverfahren wird sie in einem letzten Schritt auf den Baustein aufgebracht und bedeckt diesen, mit Ausnahme der Kontaktflächen 10, im Wesentlichen vollständig.

Eine derartige Schutzschicht kann der Wirkung der tensilen Beschichtung 9 entgegenwirken. Deshalb wird sie vorzugsweise so strukturiert, dass sie sich zumindest nicht über die Membran 5 erstreckt. Hierzu kann sie im Bereich der Membran 5 weggelassen oder vor Aufbringen der tensilen Beschichtung entfernt werden.

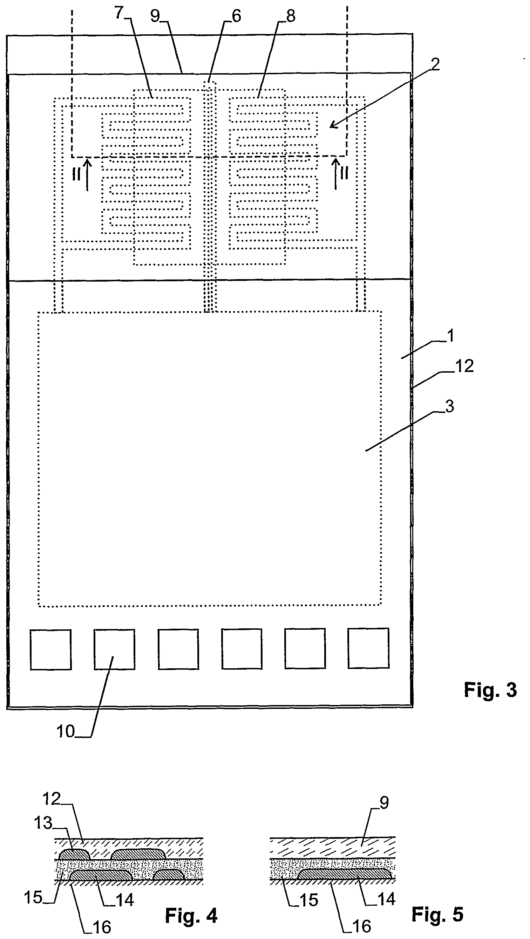

Ein entsprechender Sensor ist in Fig. 3 dargestellt. Dieser weist eine Schutzschicht 12 auf, welche unter Druckspannung steht und zumindest die Schaltung 3 überdeckt und schützt.

Die Schutzwirkung der kompressiven Schutzschicht 12 ist in der Regel besser als jene der tensilen Beschichtung 9, da letztere aufgrund der in ihr herrschenden Zugspannung zu Lochbildung und Rissen neigen kann. Deshalb sollte die tensile Beschichtung 9 nicht direkt auf einer (korrosionsanfälligen) Metallschicht angeordnet werden.

Bei normalen CMOS-Bausteinen sind in der Regel mehrere Metallschichten vorgesehen, wie dies in Fig. 4 dargestellt ist. In diesem Beispiel ist die oberste Metallschicht 13 von der Schutzschicht 12 bedeckt und von der zweitobersten Metallschicht 14 durch eine Siliziumoxidschicht 15 getrennt. Unterhalb der unteren Metallschicht 14 folgen gegebenenfalls weitere Schichten 16.

Wird die Schutzschicht 12 durch die tensile Beschichtung 9 ersetzt, so sollte die oberste Metallschicht 13 weggelassen werden, wie dies in Fig. 5 dargestellt ist. Im vorliegenden Fall sollten also keine Strukturen der obersten Metallschicht 13 im Bereich der Beschichtung 9 vorgesehen sein. Dadurch wird sichergestellt, dass im Bereich der Beschichtung 9 alle Metallstrukturen durch die Siliziumoxidschicht 15 geschützt sind. Die Siliziumoxidschicht 15 bildet somit eine Trennschicht zwischen der Beschichtung 9 und den Metallstrukturen des Bausteins und schützt diese vor Umwelteinflüssen.

Wie bereits erwähnt, kann die Schutzschicht 12 im Bereich der Membran 5 weggelassen oder vor Aufbringen der tensilen Beschichtung 9 entfernt werden. In letzterem Fall muss die Schutzschicht 9 im Bereich der Membran 5 weggeätzt werden. Hierbei ist jedoch zu vermeiden, dass die Siliziumoxidschicht 15, mit welcher die Strukturen der unteren Metallschicht 14 geschützt werden sollen, beschädigt wird.

Da es kaum Ätzverfahren mit einer guten Selektivität zwischen Siliziumoxid und Siliziumnitrid gibt, wird beim Wegätzen der Schutzschicht 12 die oberste Metallschicht 13 vorzugsweise als Ätzstopp verwendet. Hierzu wird diese so strukturiert, dass sie sich zumindest über die ganze Membran 5 erstreckt. Sodann wird der Baustein mit der Beschichtung 12 versehen. Jetzt kann die Beschichtung 12 im Bereich der Membran mit einem ersten Ätzmittel entfernt werden, wobei die oberste Metallschicht 13 die darunterliegende Siliziumoxidschicht 15 schützt. Dann kann die oberste Metallschicht 13 im Bereich der Membran 5 durch ein metallselektives zweites Ätzmittel ebenfalls entfernt werden, wiederum ohne Beeinträchtigung der Siliziumoxidschicht 14. Schliesslich wird die Beschichtung 9 auf die Siliziumoxidschicht 14 aufgebracht.

Die Regel, dass die Beschichtung 9 nicht direkt auf einer Metallstruktur zu liegen kommt, ist auch im Bereich allfälliger "Scribe-Lines" zu beachten. Hierbei handelt es sich um Diffusionsbarrieren, die gebildet werden, indem in einem Bereich alle Schichten mit Ausnahme der Metallschichten weggelassen werden. Ist eine Scribe-Line unter der Beschichtung 9 angeordnet, so sollte auf der Scribe-Line die Siliziumoxidschicht 15 belassen werden.

Während in der vorliegenden Anmeldung bevorzugte Ausführungen der Erfindung beschrieben sind, ist klar darauf hinzuweisen, dass die Erfindung nicht auf diese Beschränkt ist und in auch anderer Weise innerhalb des Umfangs der folgenden Ansprüche ausgeführt werden kann.

## Patentansprüche

1. Sensor mit einem Halbleiterbaustein (1), auf welchem ein Messelement (2) integriert ist, wobei das Messelement (2) auf einer Membran (5) über einer Öffnung (4) oder Vertiefung des Halbleiterbausteins (1) angeordnet ist, wobei auf dem Halbleiterbaustein (1) eine tensile Beschichtung (9) zur Straffung der Membran (5) angeordnet ist, wobei die tensile Beschichtung (9) sich über die Membran (5) erstreckt, wobei die tensile Beschichtung (9) unter Zugspannung steht, wobei die tensile Beschichtung (9) die Membran (5) an mindestens zwei gegenüber liegenden Seiten überlappt, **dadurch gekennzeichnet, dass** eine Schaltung (3) mit aktiven elektronischen Komponenten auf dem Halbleiterbaustein (1) integriert ist, und dass die tensile Beschichtung (9) mindestens einen Teil der aktiven elektronischen Komponenten der Schaltung (3) unbedeckt lässt.

2. Sensor nach Anspruch 1, wobei die tensile Beschichtung (9) mindestens die aktiven elektronischen Komponenten der Schaltung (3) unbedeckt lässt.

3. Sensor nach einem der vorangehenden Ansprüche, wobei die aktiven elektronischen Komponenten der Schaltung (3) Transistoren umfassen.

4. Sensor nach einem der vorangehenden Ansprüche, wobei die Schaltung (3) zur Auswertung von Signalen des Messelements (2) ausgestaltet ist, und insbesondere dass die Schaltung (3) nicht von der tensilen Beschichtung (9) bedeckt ist.

5. Sensor nach einem der vorangehenden Ansprüche, wobei die tensile Beschichtung (9) die Membran (5) allseitig überlappt.

6. Sensor nach einem der vorangehenden Ansprüche, wobei die Tensilität der Beschichtung (9) mindestens 100 MPa beträgt.

7. Sensor nach einem der vorangehenden Ansprüche, wobei auf der Membran Bauteile (6, 7, 8) angeordnet sind und dass die tensile Beschichtung über der Membran (5) und über den Bauteilen (6, 7, 8) angeordnet ist.

8. Sensor nach einem der vorangehenden Ansprüche, wobei eine Schutzschicht (12) zum Schützen der elektronischen Komponenten auf dem Sensor angeordnet ist, wobei die Schutzschicht unter Druckspannung steht, und dass sich die Schutzschicht nicht über die Membran (5) erstreckt.

9. Sensor nach Anspruch 8, wobei die Schutzschicht (12) und die tensile Beschichtung (9) aus Siliziumnitrid bestehen.

10. Sensor nach einem der vorangehenden Ansprüche, wobei auf dem Halbleiterbaustein metallische Strukturen (13, 14) angeordnet sind und dass die tensile Beschichtung (9) von den metallischen Strukturen durch mindestens eine Trennschicht (15), vorzugsweise aus Siliziumoxid, getrennt ist.

11. Verwendung eines Sensors nach einem der Ansprüche 1 bis 10 als Flusssensor.

12. Verwendung nach Anspruch 11, **dadurch gekennzeichnet, dass** ein Teil des Halbleiterbausteins einem zu messenden Medium ausgesetzt wird, wobei dieser Teil von der tensilen Beschichtung bedeckt ist.

## Claims

1. Sensor with a semiconductor component (1), on which a measurement element (2) is integrated, wherein the measurement element (2) is arranged on a membrane (5) above an opening (4) or cavity of the semiconductor component (1), wherein a tensile coating (9) for stretching the membrane (5) is arranged on the semiconductor component (1), wherein the tensile coating (9) extends above the membrane (5), wherein the tensile coating (9) is subjected to tensile stress, wherein the tensile coating (9) overlaps the membrane (5) on at least two opposed sides, **characterized in that** a circuit (3) with active electronic components is integrated on the semiconductor component (1), and **in that** the tensile coating (9) leaves uncovered at least a part of the active electronic components of the circuit (3).

2. Sensor according to claim 1, wherein the tensile coating (9) leaves uncovered at least the active electronic components of the circuit (3).

3. Sensor according to one of the preceding claims, wherein the active electronic components of the circuit (3) comprise transistors.

4. Sensor according to one of the preceding claims, wherein the circuit (3) is adapted to evaluate signals of the measurement element (2), and particularly wherein the circuit (3) is not covered by the tensile coating (9).

5. Sensor according to one of the preceding claims, wherein the tensile coating (9) overlaps the membrane (5) on all sides.

6. Sensor according to one of the preceding claims, wherein the tensile stress of the coating (9) is at least 100 MPa.

7. Sensor according to one of the preceding claims, wherein components (6, 7, 8) are arranged on the membrane and the tensile coating is arranged above the membrane (5) and above the components (6, 7, 8).

8. Sensor according to one of the preceding claims, wherein a protective layer (12) for protecting the electronic components is arranged on the sensor, wherein the protective layer is under compressive stress, and wherein the protective layer doesn't extend above the membrane (5).

9. Sensor according to claim 8, wherein the protective layer (12) and the tensile coating (9) consist of silicon nitride.

10. Sensor according to one of the preceding claims, wherein metallic structures (13, 14) are arranged on the semiconductor component and the tensile coating (9) is separated from the metallic structures by at least a separation layer (15), preferably made of silicon oxide.

11. Use of a sensor according to one of the claims 1 to 10 as flow sensor.

12. Use according to claim 11, **characterized in that** a part of the semiconductor component is exposed to a medium to be measured, wherein this part is covered by the tensile coating.

## Revendications

1. Capteur avec un composant semi-conducteur (1), sur lequel un élément de mesure (2) est intégré, l'élément semi-conducteur (2) étant arrangé sur une membrane (5) au-dessus d'une ouverture (4) ou d'une cavité du composant semi-conducteur (1), un revêtement tendu (9) pour tendre la membrane (5) étant arrangé sur le composant semi-conducteur (1), le revêtement tendu (9) s'étendant au-dessus de la membrane (5), le revêtement tendu (9) étant soumis à une tension de traction, le revêtement tendu (9) chevauchant la membrane (5) au moins de deux côtés opposés, **caractérisé en ce qu'**un circuit (3) avec des composants électroniques actifs est intégré sur le composant semi-conducteur (1), et **en ce que** le revêtement tendu (9) laisse libre au moins une partie des composant électroniques actifs du circuit (3).

2. Capteur selon la revendication 1, le revêtement tendu (9) laissant libre au moins les composants électroniques actifs du circuit (3).

3. Capteur selon l'une des revendications précédentes, les composants électroniques actifs du circuit (3) comprenant des transistors.

4. Capteur selon l'une des revendications précédentes, le circuit (3) étant adapté à évaluer des signaux de l'élément de mesure (2), et particulièrement le circuit (3) n'étant pas couvert par le revêtement tendu (9).

5. Capteur selon l'une des revendications précédentes, le revêtement tendu (9) chevauchant la membrane (5) des tous côtés.

6. Capteur selon l'une des revendications précédentes, la tension de traction du revêtement (9) étant d'au moins 100 MPa.

7. Capteur selon l'une des revendications précédentes, des composants (6, 7, 8) étant arrangés sur la membrane et le revêtement tendu étant arrangé au-dessus de la membrane (5) et au-dessus des composants (6, 7, 8).

8. Capteur selon l'une des revendications précédentes, une couche protectrice (12) pour protéger les composants électroniques étant arrangée sur le capteur, la couche protectrice étant soumise à une tension de compression, et la couche protectrice ne s'étendant pas au-dessus de la membrane (5).

9. Capteur selon la revendication 8, la couche protectrice (12) et le revêtement tendu (9) consistant de nitrure de silicium.

10. Capteur selon l'une des revendications précédentes, des structures métalliques (13, 14) étant arrangées sur le composant semi-conducteur et le revêtement tendu (9) étant séparé des structures métalliques par au moins une couche de séparation (15), préférablement en oxyde de silicium.

11. Utilisation d'un capteur selon l'une des revendications 1 à 10 comme capteur de débit.

12. Utilisation selon la revendication 11, **caractérisée en ce qu'**une partie du composant semi-conducteur est exposé à un médium à mesurer, cette partie étant recouverte par le revêtement tendu.
